(19) 

Europäisches Patentamt

European Patent Office

Office européen des brevets

(11) **EP 4 729 975 A1**

(12) **EUROPEAN PATENT APPLICATION**

(43) Date of publication:
**22.04.2026  Bulletin 2026/17**

(21) Application number: **24207617.2**

(22) Date of filing: **18.10.2024**

(51) International Patent Classification (IPC):
**G01S 5/00** (2006.01)     **G01S 5/02** (2010.01)
**G01S 5/14** (2006.01)     **G01S 13/76** (2006.01)

(52) Cooperative Patent Classification (CPC):
**G01S 5/0289; G01S 5/0072; G01S 5/14;**
G01S 5/0284

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Leica Geosystems Technology A/S
5220 Odense SØ (DK)**

(72) Inventors:
• **KEAN, Michael Goulet**
  **5000 Odense C (DK)**
• **MULLIS, Brad**
  **5200 Odense (DK)**
• **LARSEN, Leon**
  **5863 Ferritslev Fyn (DK)**

(74) Representative: **Kaminski Harmann
Patentanwälte AG
Landstrasse 124
9490 Vaduz (LI)**

(54) **VEHICLE POSITIONING USING RADIO RANGE FINDING**

(57)     The invention pertains to a method for continuously determining a position of one or more moving vehicles of a fleet of vehicles, the fleet of vehicles including a primary vehicle (10) and one or more subordinate vehicles (11), the primary vehicle being equipped with a reference positioning system comprising one or more components - e.g., GNSS antennas - (51, 52), the reference positioning system providing reference position information regarding a position in a reference coordinate system, the method comprising: providing an anchor module (2) at the primary vehicle, comprising at least three radio-frequency sensors (21, 22, 23) that are positioned on the primary vehicle with a known spatial relationship to one another and to the one or more components, each of the radio-frequency sensors being configured to emit and receive radio signals; providing a tag module (3) on each of the subordinate vehicles (11), each tag module being configured to emit and receive radio signals; and at least a first ranging process for continuously determining the position of a first subordinate vehicle, wherein the first ranging process comprises: determining a position of the radio-frequency sensors in the reference coordinate system; exchanging a set of radio signals between a first tag module on the first subordinate vehicle and each of the radio-frequency sensors; calculating a time of flight of each set of radio signals; calculating a distance ($d_1$, $d_2$, $d_3$) between the first tag module and each of the respective radio-frequency sensors based on the determined time of flight of the respective set of radio signals; deriving a position of the first tag module and/or the first subordinate vehicle in the reference coordinate system based on the calculated distances; and providing a report signal indicating the derived position of the first subordinate vehicle.

Fig. 2

EP 4 729 975 A1

**Description**

The invention pertains to a method and system for localizing a plurality of vehicles that work together as a fleet. More specifically, only a primary vehicle of the fleet is equipped with positioning system (e.g., a GNSS or TPS positioning system), and the positions of the other vehicles are determined relative to a global coordinate system provided by the positioning system using radio signals and time-of-flight measurement.

One example of a plurality of vehicles that work together as a fleet are paving trains, in which two or more mobile machines travel in formation for laying concrete or asphalt material and producing a continuous surface layer having a desired surface profile along a predetermined path. In particular, such paving trains are used in the construction and repair of roads, runways etc. The machines used in the paving train comprise, for example, at least one spreader and at least one finisher - such as a slipform paver or an asphalt paver. Likewise known is the use of two or more finishers in one paving train. The finisher is generally followed by a spray vehicle which sprays chemicals onto the surface which prevent excessively fast drying of the material. In the paving process, the material to be laid is usually delivered by means of a loader unit, such as a truck or a mixer, and is unloaded along the predetermined path. The spreader is equipped for distributing material and carries out a transverse distribution and also an initial smoothing of the material. The coarse smoothing is effected by means of a drawing device of the spreader in such a way that approximately the desired height of the surface layer is achieved. Trailing behind the spreader at a predeterminable distance, the finisher then draws the material by means of its characteristic beam, which, for example, may be a screeding beam or may have a profile, so that the desired height of the surface layer is achieved. Preferably, each machine of the paving train should have access to its current GNSS position in order to perform its task precisely and efficiently. Current systems for positioning machines working together as a fleet usually require each machine to be fitted with a GNSS positioning system. Using such a system, each machine knows its location in the world, which allows them to coordinate their activities relative to a single, global map. This can be costly, as GNSS receivers are expensive devices with high computational power. This leads to a high investment across the fleet.

An alternative to the traditional approach is to mount a single GNSS positioning system on the primary machine and to determine positions of the other machines relative to the primary machine. EP 2 155 968 B1 discloses a paving train for producing a surface layer, the train comprising a plurality of individually moving units, wherein each unit is configured to perform a processing step in the production of the surface layer. Only a first unit comprises a GNSS receiver to determine its position, and an optical guidance system is used for determining the positions of the further units. This comprises sending out optical reference beams onto photosensitive receiving devices of other units. This solution disadvantageously requires several light emitters and several light receivers, all of which must be aligned and aimed at each other, which makes it difficult to incorporate a large number of machines.

EP 3 477 335 B1 discloses a proximity warning system that uses radio-frequency-based time-of-flight ranging between anchors and tags. Anchors are placed on mobile machines (heavy mining equipment) and the personnel (pedestrians) wear tags. The anchors and tags are used to measure a distance between the machine and personnel and to issue a proximity alert if the distance passes a threshold. However, the system is not used to calculate a full location solution for the personnel relative to the machine or between two machines.

It is an object of the present invention to provide an improved method and system that allow determining the positions of moving vehicles.

It is a particular object to provide such a method and system, wherein the plurality of vehicles work together as a fleet, particularly wherein the vehicles are mobile construction machines.

It is another object to provide such a method and system, wherein the positions may be determined with less effort, more reliably and over larger distances, in particular wherein the positions are determined in a GNSS coordinate system, without the need for providing GNSS antennas on each vehicle.

At least one of these objects is achieved by the method of claim 1, the vehicle positioning system of claim 13 and/or the dependent claims of the present invention.

According to the proposed solution, in a fleet of vehicles (or "machines") a single GNSS or TPS positioning system (reference positioning system) is mounted on a first ("primary") machine and a system of peer-to-peer radio range finders is mounted on a number of other ("subordinate") machines. The distances measured by the peer-to-peer system can then be used to determine a network geometry, and the time rate of change of the distances can be used to determine the direction of travel of the various machines in the fleet. By further leveraging the ground speed and heading of the primary vehicle, it is possible to determine the ground speed and direction of the subordinate vehicles as well.

A first aspect of the invention pertains to a method for continuously determining a position of one or more moving vehicles of a fleet of vehicles. The fleet of vehicles includes a primary vehicle and one or more subordinate vehicles, the primary vehicle being equipped with one or more components of a reference positioning system, the reference positioning system providing reference position information regarding a position of the one or more components in a reference coordinate system.

For instance, said reference positioning system can be a GNSS positioning system, the one or more components being one or more GNSS antennas that are configured to receive GNSS signals, the GNSS positioning system providing GNSS position information regarding a position of the one or more GNSS antennas in a GNSS coordinate system. Alternatively, the reference positioning system can be a TPS, the one or more components being at least two reflective targets, such as prisms, that are tracked by theodolites or total stations, the TPS providing TPS position information regarding a position of the reflective targets in a TPS coordinate system.

According to this aspect of the invention, the method comprises:

- providing an anchor module at the primary vehicle, the anchor module comprising at least three radio-frequency (RF) sensors that are positioned on the primary vehicle with a known spatial relationship to one another and to the one or more components, each of the RF sensors being configured to emit and receive radio signals;
- providing a tag module on each of the subordinate vehicles, each tag module being configured to emit and receive radio signals; and
- performing one or more ranging processes for continuously determining the positions of each of the subordinate vehicles, the one or more ranging processes comprising at least a first ranging process for determining the position of a first subordinate vehicle.

The first ranging process comprises:

- determining, using the reference position information and the known spatial relationship, a position of the RF sensors in the reference coordinate system;
- exchanging a set of radio signals between a first tag module on the first subordinate vehicle and each of the RF sensors;
- calculating a time of flight of each set of radio signals;
- calculating a distance between the first tag module and each of the respective RF sensors based on the determined time of flight of the respective set of radio signals;
- deriving a position of the first tag module and/or the first subordinate vehicle in the reference coordinate system based on the calculated distances; and
- providing a report signal indicating the derived position of the first subordinate vehicle.

According to some embodiments of the method, the frequency of the set of signals is in the ultra-wideband range.

According to some embodiments of the method, the set of signals comprises a range signal and a response signal, wherein the range signal is emitted by the RF sensors of the anchor module, and the response signal is emitted, in response to receiving the range signal, by the first tag module, particularly wherein the RF sensors emit the range signal simultaneously. Alternatively, the range signal can also be emitted by the first tag module, and the response signal is emitted by the RF sensors of the anchor module.

In some embodiments, the response signal is emitted after a known response time, e.g. being shorter than 1 ms, and calculating the distance between the first tag module and each of the radio-frequency sensors is also based on the response time. Optionally, the range signal may be emitted at a first point of time, and the response signal may be received at a second point of time, wherein calculating the time of flight of the sets of radio signals is based on the following equation:

$$ToF = \frac{t_1 - t_0 - \Delta t}{2},$$

where ToF is the time of flight, $t_0$ is the first point of time, $t_1$ is the second point of time and $\Delta t$ is the known response time. For instance, each time of flight can be calculated at the anchor module.

In some embodiments, an initialization signal is emitted by the first tag module, and the range signal is emitted upon receiving the initialization signal, particularly wherein the initialization signal comprises information allowing identification of the first tag module and/or the first subordinate vehicle.

According to some embodiments of the method, the report signal is provided to the first subordinate vehicle, wherein the position of the first subordinate vehicle is displayed to an operator of the first subordinate vehicle and/or provided to a machine control unit of the first subordinate vehicle for at least partially controlling operation of the first subordinate vehicle. Optionally, providing the report signal comprises emitting the report signal by at least one of the RF sensors and receiving the report signal by the first tag module.

If the signals from the anchor radios to the tags include the GNSS position of the anchor, then the tag can fully calculate the network geometry as well as its own GNSS position. For instance, this may comprise the following steps:

- calibrating the GNSS antennas relative to the anchor RF radios once they are all mounted on the primary machine;
- the system using the measured GNSS position and calibration data to calculate the GNSS position of the anchor RF radios;
- the anchor RF radios communicating their GNSS position when they send a message to the tags; and
- the tags using the measured distances along with the GNSS positions of the RF radios to calculate their GNSS position.

According to some embodiments of the method, providing the anchor module comprises:

- positioning at least three RF sensors of the anchor module in a common plane, e.g. a common horizontal plane;
- determining a geometry of the RF sensors and the one or more components; and
- determining an orientation of the RF sensors relative to a heading direction of the primary vehicle.

Optionally, for adjusting the RF sensors of the anchor module to be at a same height, the primary vehicle may be placed on a level surface. Providing the tag modules may comprise positioning each tag module in the common plane.

According to some embodiments of the method, the anchor module comprises at least four RF sensors, and the derived position of the first tag module and/or the first subordinate vehicle is a 3D position, the 3D position being derived based on the calculated distances between the first tag module and the at least four RF sensors.

For instance, the 3D position of the first subordinate vehicle may be derived relative to the primary vehicle.

Optionally, providing the anchor module comprises positioning at least three RF sensors of the anchor module in a common plane and at least one RF sensor of the anchor module outside of the common plane.

According to some embodiments of the method, the set of signals is exchanged iteratively, e.g. at least every 500 ms, for instance wherein each iteration of exchanging the set of signals effects calculating the distance, deriving the position of the first subordinate vehicle and providing the report signal.

In some embodiments, the method further comprises receiving, at the anchor module, velocity information regarding a current velocity of the primary vehicle, and calculating, based on the velocity information and on a plurality of calculated distances and/or derived positions, a current or recent velocity of the first subordinate vehicle. The report signal then also indicates the current or recent velocity of the first subordinate vehicle , and optionally also the current velocity of the primary vehicle.

A velocity of the primary vehicle can be determined based on GNSS data or based on a combination of GNSS and IMU data. It is also possible to directly measure the speed of the tags relative to the anchor radios using the doppler frequency shift in the ranging messages. Optionally, the subordinate vehicles can also use IMU data or odometry data to help measure their own local or global speed.

According to some embodiments of the method, the fleet comprises at least two subordinate vehicles and the method comprises at least a second ranging process for continuously determining the position of a second subordinate vehicle. In particular, the fleet may comprise a plurality of subordinate vehicles so that the method comprises a plurality of simultaneously performed ranging processes for continuously determining the positions of the plurality of subordinate vehicles.

A second aspect of the invention pertains to a vehicle positioning system configured to continuously determine - particularly according to the method of the first aspect - a position of one or more moving vehicles of a fleet of vehicles, the fleet including a primary vehicle and one or more subordinate vehicles, the primary vehicle being equipped with a reference positioning system comprising one or more components, the reference positioning system providing reference position information regarding a position in a reference coordinate system. According to this aspect of the invention, the vehicle positioning system comprises

- an anchor module provided at the primary vehicle, the anchor module comprising at least three RF sensors that are positioned on the primary vehicle with a known spatial relationship to one another and to the one or more components, each of the RF sensors being configured to emit and receive radio signals, and
- a tag module provided on each of the subordinate vehicles, each tag module being configured to emit and receive radio signals.

The vehicle positioning system is configured to perform at least a first ranging process for continuously determining the position of a first subordinate vehicle, the first ranging process comprising:

- determining, using the reference position information and the known spatial relationship, a position of the RF sensors in the reference coordinate system;
- exchanging a set of radio signals between a first tag module on the first subordinate vehicle and each of the radio-frequency sensors;
- calculating a time of flight of each set of radio signals;
- calculating a distance between the first tag module and each of the respective radio-frequency sensors based on the determined time of flight of the respective set of radio signals;
- deriving a position of the first tag module and/or the first subordinate vehicle in the reference coordinate system based on the calculated distances; and
- providing a report signal indicating the derived position of the first subordinate vehicle.

As described above, the reference positioning system could be a GNSS positioning system or a TPS.

A third aspect of the invention pertains to a computer program product for performing the one or more ranging processes of the method according to the first aspect of the invention.

The invention in the following will be described in detail by referring to exemplary embodiments that are accompanied by figures, in which:

Fig. 1    shows an example of a fleet of vehicles equipped with an exemplary embodiment of a system according to the invention;

Fig. 2    illustrates the working principle of an exemplary embodiment of a system according to the invention;

Fig. 3    shows a flow chart illustrating an exemplary embodiment of a method according to the invention;

Fig. 4    shows a flow chart illustrating the step of positioning an anchor module on a primary vehicle as part of the method of Fig. 3; and

Fig. 5    illustrates a ranging protocol of an exemplary embodiment of a system according to the invention.

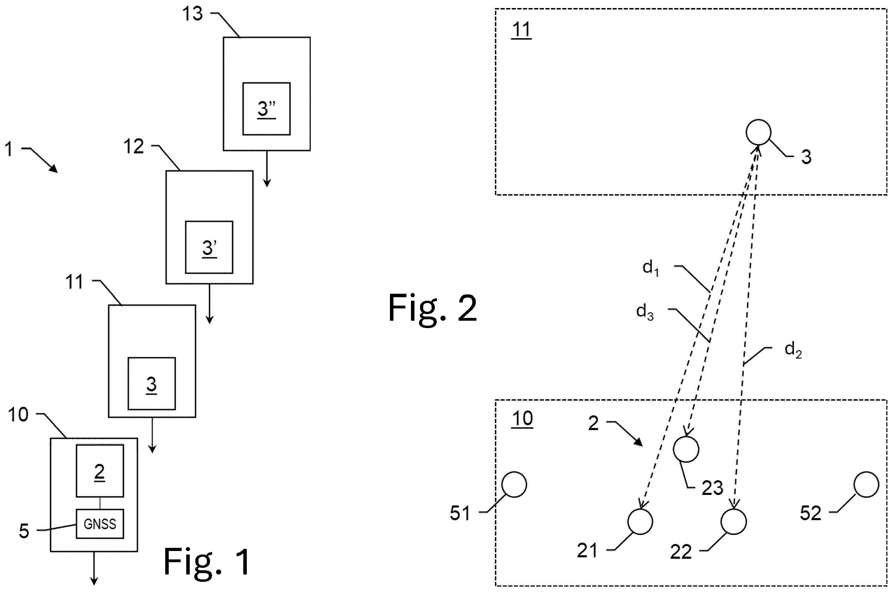

Figure 1 shows a paving train as an example of a plurality of vehicles that work together as a fleet 1. The vehicles of the paving train are mobile machines comprising an asphalt paver combined as the primary vehicle 10 and a number of roller compactors as subordinate vehicles 11, 12, 13. The primary vehicle 10 comprises a positioning system 5 with one or more GNSS antennas (e.g., a pair of GNSS antennas) as well as an anchor module 2 comprising three radiofrequency (RF) ranging sensors, collectively called "anchor sensors". Each of the subordinate machines 11, 12, 13 is equipped with a tag module 3, 3', 3" comprising a single RF ranging sensor ("tag sensor"). The combination of positioning system 5 and anchor module 2 on the primary machine 10 serves as a globally positioned local positioning network (GP-LPN). The anchor module 2 and/or the tag modules 3, 3', 3" may include computing units (e.g., comprising a processor, a data storage and communication means) for computing distances and/or positions based on the sensor data.

Instead of using a positioning system with GNSS antennas (GNSS positioning system), the primary vehicle may also be tracked globally using a pair of prisms (or similar target objects) that are provided on the primary vehicle and theodolites or total stations (total positioning system, TPS).

Another example of a plurality of machines that work together as a fleet 1 is an excavator or wheel loader operating as the primary vehicle with a fleet of dump trucks operating as the subordinate vehicles.

An additional advantage of the proposed solution is that the radio links can be used not only for ranging but also for information transmission. So, any communication between a primary vehicle and a fleet of subordinate vehicles can be piggybacked on the ranging communication without need for additional communication links. Similarly, if an existing radio link exists, it may be possible to modify the carrier signal to accomplish ranging based on the existing components.

Figure 2 illustrates the working principle of an exemplary embodiment of a system according to the invention. In this example, the fleet comprises only one primary vehicle 10 and one subordinate vehicle 11. The primary vehicle 10 is equipped with a GP-LPN (i.e., a combination of GNSS positioning system and anchor module) and the subordinate vehicle 11 is equipped with a tag module 3. In the shown embodiment the GP-LPN comprises a GNSS positioning system having two GNSS antennas 51, 52, and an anchor module 2, which comprises three anchor sensors 21, 22, 23.

The three anchor sensors 21, 22, 23 and the tag module 3 are positioned in the same reference plane, i.e., at the same height. By determining the distances $d_1$, $d_2$, $d_3$ between the three anchor sensors 21, 22, 23 and the tag 3, it is possible to determine a 2D position of the tag module 3 relative to the anchor module 2. Since the anchor sensors 21, 22, 23 and the GNSS antennas 51, 52 have known positions relative to another, a position of the tag module 3 relative to a "global" position in coordinate system provided by the GNSS positioning system can be determined. Since the anchor sensors 21, 22, 23 and the GNSS antennas 51, 52 have known positions on (i.e., relative to) the primary vehicle 10, and the tag module 3 has a known position on (i.e., relative to) the subordinate vehicle 11, it is also possible to determine a 2D position of the subordinate vehicle 11 relative to the primary vehicle 10.

Optionally, the GNSS antenna(s) 51, 52 may be used as anchor sensors of the GP-LPN. Alternatively, a single housing comprising a GNSS antenna and an anchor sensor, wherein antenna and sensor are positioned close enough that the separation can be neglected. In this case, the locations of the GNSS antenna(s) will coincide with one or more of the anchor sensor locations.

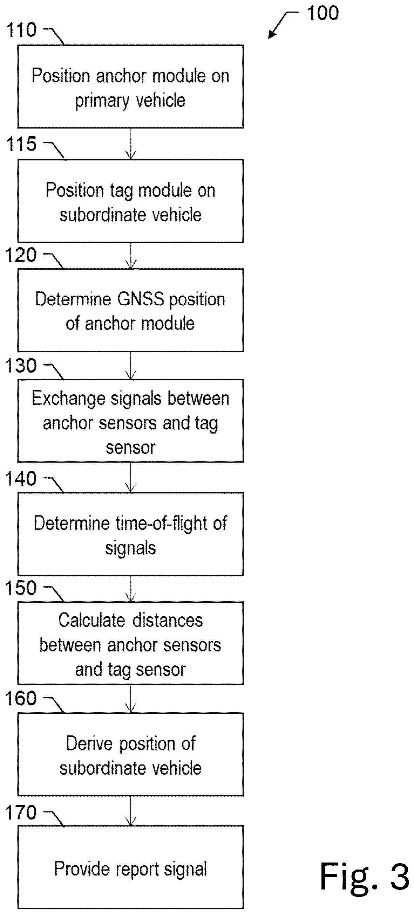

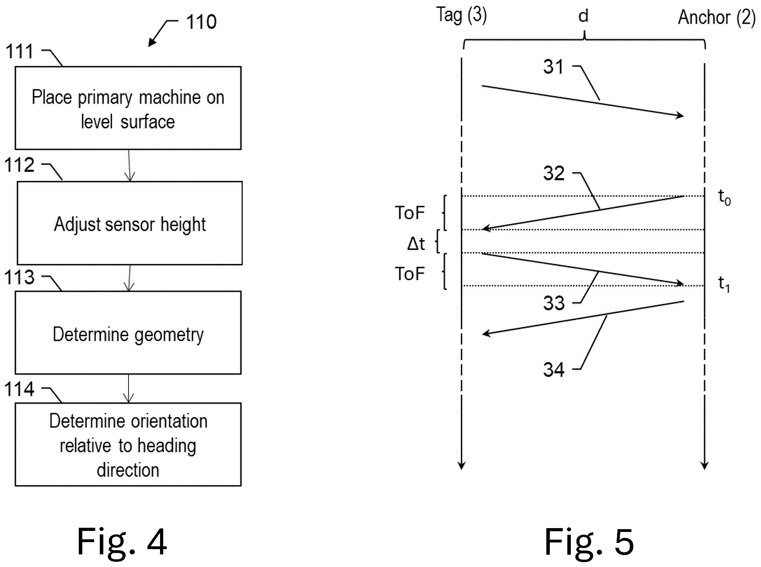

Figure 3 shows a flow-chart illustrating an exemplary embodiment of a method 100 of continuously determining a position of one or more moving vehicles according to the invention. The method starts with positioning 110 the anchor module on the primary vehicle and positioning 115 the tag module on the subordinate vehicles. To be able to use the anchor module as part of the GP-LPN, its internal geometry needs to be calibrated. This is described in detail with respect to Figure 4.

After the anchor module has been positioned properly on the primary vehicle, its GNSS position can be continuously determined 120 and the ranging process can be initiated, which is described in detail with respect to Figure 5. The ranging process comprises an exchange 130 of radio signals, particularly in the ultra-wideband frequency range, between the anchor module and the tag module(s). The signals' times-of-flight (ToF) are determined 140 and distances between the anchor sensors and the tag module(s) are calculated 150. Position(s) of the subordinate vehicle(s) can be derived 160 from these distances. Report signals indication said position(s) can then be provided 170, e.g. to a supervisor of the fleet of vehicles or to an operator of the respective subordinate vehicle. Also, the signal may be provided to a machine control unit of the subordinate vehicle, to control the vehicle at least partly.

In cases with many subordinate vehicles, it is possible to "leapfrog" the positioning where subordinate vehicles that cannot communicate with the anchors due to distance or loss of line of sight can be positioned relative to other subordinate vehicles that have a valid position from the anchors. In this way, the subordinate vehicles can also form a mesh network that is used to position themselves so long as each tag can communicate with at least three other tags with valid position solutions. That is, for tags that cannot communicate with the anchors, a set of three or more tags with valid positions can serve as "moving anchors".

Optionally, the subordinate vehicles can incorporate IMU data and run an on-board INS (inertial navigation system) to track their position in addition to the radio range positioning system. This increases the accuracy of their position between radio messages, lowers the rate at which radio ranging must recur decreasing computational and communication loads on the network, increases knowledge of subordinate vehicle velocity, and results in a system that is more robust to partial or complete radio contact dropouts.

Figure 4 shows a flow-chart illustrating an exemplary process of positioning 110 the anchor module on the primary vehicle. In the shown embodiment, to calibrate the GP-LPN, the process includes levelling all of the sensors at the same height and then determining the geometry of the ranging sensor network and the GNSS antenna(s). While any suitable method may be used to level the sensors, in the shown embodiment, it includes placing 111 the primary machine 10 on a level surface, placing a spirit level across the tops of the GNSS receiver and one of the anchor sensors, and adjusting 112 the height of the sensors until the two are level. This can be repeated on subsequent sensors until all of them are at the same height. Alternatively, a plane laser can be used to project a laser line that enables all of the sensors to be levelled. The sensors may be mounted with electronic actuators enabling them to self-level or they may be manually levelled. The levelling process ends with the sensors in a single sensing plane.

Next, the geometry of the anchor sensors and the GNSS receiver(s) must be determined 113. The anchor sensors can determine their own geometry within the sensing plane by measuring the distances between each pair. This then defines the size of a triangle with vertices at the anchor sensors. There are, however, still two solutions for the geometry as the system cannot detect the vertical direction. The anchor sensors must be calibrated to the GNSS antennas in order to merge the local and global coordinate frame. The most convenient method for this is to collocate the GNSS antennas and anchor sensors so that the two GNSS antenna positions are also used for the RF positioning network. This may also be accomplished using the geometry of the antenna housing and fixed offsets from the levelling point on the antenna such that the GNSS antennas and anchor sensors can share a common housing that enables precise calibration of the GNSS measurement frame and the RF positioning network. Alternatively, a fourth anchor sensor can be mounted on a GNSS rover pole. By moving this rover pole to several locations in the vicinity of the machine, the location of the GNSS antenna(s) on the vehicle to the roving antenna can be combined with the anchor sensor on the pole to simultaneously determine the location of the GNSS antenna within the RF ranging network and solve for the geometry of the anchor sensors. For this step it is not necessary to have either the GNSS antenna or anchor sensor on the rover pole lie within the sensing plane.

Next, the heading rotation of the local positioning network relative to the longitudinal axis of the vehicle needs to be calibrated. In general, this may be handled by existing calibration routines used for mounting GNSS antennas onto construction equipment. However, a system according to the invention allows using an alternative method. The vehicle must be started and driven straight forward while the combined GNSS/RF rover pole is left stationary. This enables the system to determine 114 the orientation of the sensor network on the primary vehicle relative to the forward direction. In this case, the direction of motion of the GNSS antenna(s) is assumed to be along the longitudinal axis of the vehicle. For a primary vehicle outfitted with a pair of GNSS antennas, this motion also allows the system to calculate heading offset between the vector between the GNSS antennas and the longitudinal axis of the vehicle. This procedure fully determines all of the mounting geometry simply by driving the machine past a stationary rover pole.

A single GNSS antenna may also be used instead of a pair of GNSS antennas. In this case, the heading of the primary vehicle can only be determined when the primary vehicle is moving, i.e. the heading is determined using a trace heading of the GNSS position. In this case, the global velocity is measured by taking a finite difference of two subsequent position measurements and it is assumed that the global velocity lies along the primary vehicle's longitudinal axis. In the case of a primary vehicle with dual GNSS antennas, the global heading can be determined from the pair of antennas, as is the angle between the global velocity and the vehicle heading. Regardless of the number of GNSS antennas on the primary vehicle, the use of the RF ranging network allows the extension of global position from the primary vehicle to all subordinate vehicles and also allows the estimation of velocity and direction of travel for the subordinate vehicles.

Alternatively, a relative velocity between the tags and anchor may be calculated using Doppler of the ranging message. This includes an IMU with the tags and running an Inertial Navigation System on the tag and using knowledge about vehicle wheel speed on the subordinate vehicle along with its current estimate for heading to determine the relative velocity.

Having mounted and calibrated the GP-LPS on the primary vehicle, a single RF ranging sensor (tag) may now be placed on a subordinate vehicle (step 115 in Figure 3). If a planar simplification is used, this sensor should lie in the sensing plane of the anchor module. It can be calibrated to that plane using any sensible method. The position of the subordinate vehicle can then be tracked in the local positioning system comprised of the RF ranging network. This can be related to the global network using the GNSS measured position of the RF ranging network on the primary vehicle and the orientation of the primary vehicle in a global reference frame.

This solution can be simplified by mounting the radio ranging equipment on the end of an electric mast that includes a laser catcher and a linear drive. A plane laser can then be used to move (i.e., lift) all of the transmitters to the same height. By ensuring that all of the transmitters are at the same height, a planar positioning solution can be used in place of a spatial solution. This additional simplification may be desirable in some conditions.

Figure 5 illustrates a ranging protocol of an exemplary embodiment of a system according to the invention. The protocol comprises a two-way ranging ("ping-pong") topology. The tag module (or "tag") 3 of a subordinate vehicle requests ranging information by sending (broadcasting) an initialization signal 31, which is received by the anchor module (or "anchor") 2 of the primary vehicle (i.e., each of its anchor sensors). For instance, such an initialization signal 31 may be sent every 250 ms (milliseconds). Upon receiving the initialization signal 31, the anchor 2 sends a range signal 32 back to the tag 3 at $t_0$. Preferably, $t_0$ should lie within 60 ms after the initialization signal is received. The range signal 32 arrives at the tag 3 after a first time of flight (ToF) that depends on the distance d between anchor 2 and tag 3. The tag 3 quickly sends a response signal 33 to the anchor 2, which signal arrives after a second ToF at the anchor 2 at $t_1$.

The response time $\varDelta t$, i.e. the time between receiving the range signal 32 and sending the response signal 33, is known. Preferably, it should be below 1 ms, for instance about 400 $\mu$s. If the response time $\varDelta t$ is sufficiently short, advantageously any relative movement between the anchor 2 and the tag 3 occurring during the response time $\varDelta t$ can be neglected, so that it can be assumed that the range signal 32 and the response signal 33 have the same ToF. Consequently, the tag 3 may be configured to have a response time $\varDelta t$ that depends on a maximum expectable speed (relative or absolute) of the involved vehicles - the higher their speed, the smaller the response time $\varDelta t$. The ToF and, thus, the current distance d between the anchor 2 (i.e., each of its anchor sensors) and the tag 3 can then be calculated based on the delay between $t_0$ and $t_1$ and on the known

response time $\varDelta t$:

$$ToF = \frac{t_1 - t_0 - \Delta t}{2}$$

Multiplying the calculated time of flight by the speed of light, each nanosecond equals to approximately 30 cm distance between the anchor 2 and the tag 3. From the distances of the anchor's sensors to the tag, a relative position can be deducted. Adding the known GNSS coordinates of the anchor 2, it is possible to determine the tag's position in GNSS coordinates. A report signal 34 comprising this position as payload is sent to the tag 3.

The distance calculations can occur on either radio, the anchor or the mobile radio. For instance, the anchors send a signal, the mobile radios respond, the anchors then calculate the distance to the radios and send that, along with positioning information back to the mobile radio. Alternatively, this may be inverted, i.e., the mobile radio sends a message, the anchor then sends a response which appends the current global position of the anchor to the response message. The mobile radio then calculates the distance between itself and the anchor. Due to the timings necessary, these systems may be configured to never send messages simultaneously. For instance, they may include a mode where each message is scheduled ahead of time in order to avoid message clashes and cycle slips.

Optionally, the anchors on the primary vehicle may provide the IDs and network geometry of all of the anchors. This allows the mobile radio tags to calculate their own positions relative to the global GNSS coordinates of the anchors. This lowers the computational and communication loads on the anchors, as they only need to transmit their current position and potentially the distance to the mobile radio. The mobile radio tags then include their most up to date global position to the anchors as part of the range message which is initiated by the mobile radio tags. This minimizes the cross talk between the anchors while maintaining an updated central list of tag locations. In an alternative embodiment where one or more of the anchors calculate the mobile radio locations, the anchors must communicate with each other. In this case the anchor network must determine which anchor will calculate the position of each mobile radio tag. The anchors must then share the distance calculations so that an anchor can calculate the position of a mobile radio tag. Then the anchors must combine these lists of tag positions to have a complete central list. The choice between these two alternatives depends on network bandwidth and the processing and power constraints. In a system where the tags are battery powered and very simplistic, it may be advantageous to have the anchors, which are attached to vehicle power, provide as much computation as possible. In a bandwidth-limited situation, it may be preferable to minimize radio traffic and thus have the tags calculate their own position solution.

All signals 31, 33, 33, 34 may be sent in the ultra-wideband (UWB) frequency range. Especially the initialization signal 31 and the report signal 34 may comprise further payload with information about the respective module or vehicle. For instance, information included in the initialization signal 31 may comprise an identifier of the tag module 3 and/or the subordinate vehicle, a current speed or other status information. The information included in the report signal 34 may include an identifier of the anchor module 2 and/or the primary vehicle (especially if more than one vehicle comprises an anchor module), a current velocity or heading direction or other status information. Also, the report signal 34 may be used for providing software updates or similar data to the tag module 3.

It is also possible to include data in the ranging messages such that the tags may report their current global position to the anchors along with their ID when they request a range from the anchors and the anchors may include their global position and the host vehicle orientation along with the anchor network geometry and potentially range to the tag when the anchors respond to the tags' request for a range. This data exchange could be identical regardless of which sensor calculates the distance. If the anchor calculates the distance, it is still possible for the tags to calculate their own position.

By bridging their global position and velocity from the primary vehicle to subordinate vehicles, the subordinate vehicles may be automated or controlled in the global frame without the need for their own GNSS antennas or receivers.

Some embodiments of the system allow a different ranging protocol, by means of which it is possible that the subordinate vehicles can calculate their own (absolute) position. In this case, the system utilization is as follows:

1. The RF ranging sensors (tags) on the subordinate machines send a message to each of the RF ranging sensors (anchor sensors) on the primary machine.
2. Each anchor sensor responds to the message from the tag. Included in the data packet is the anchor sensor ID as well as the GNSS position, heading, and speed of the primary vehicle, and processing time (response time) between receiving the message and transmitting the response.
3. When the tag receives the response from each anchor sensor, it can use the two-way time of flight of the message to calculate the range between the sensors.
4. The updated range from the ranging network on the primary vehicle to the subordinate vehicle can be used along with the information about the global position and motion of the primary vehicle to localize the subordinate vehicle within the ranging network and global reference frame, including position, heading, and velocity.

Using this architecture, ranging can be accomplished without the subordinate machines needing to communicate with each other and without the primary machine requiring computing power to perform the localization calculations for each of the subordinate machines. It is useful in this type of network to have an additional message defined for communication between the RF ranging sensors. The sensors on the primary machine can be configured to act as the base network and the sensors on the subordinate machines can be configured to act as roving sensors. Upon startup, roving sensors can broadcast a wakeup message (similar to the initialization signal 31 of Figure 5), which includes their sensor ID. Upon receiving such a broadcast wakeup message, sensors configured as base network sensors will respond with their own ID as well as information about the network geometry - i.e., which other sensor IDs correspond to the base network RF ranging sensors and the geometry of the GNSS antenna(s) and base network sensors in primary vehicle coordinates.

If the subordinate vehicles have surface data related to GNSS position, then it is further possible for a subordinate vehicle to use its own position, the position of the primary vehicle, and the GNSS map to compensate its position solution for non-planar surfaces. That is, each subordinate machine can compensate for motion of its RF sensor within or outside of the sensing plane due to the shape of the surface it is driving on.

In the case that the fleet of vehicles comprises an excavator or wheel loader operating as the primary machine and a fleet of dump trucks operating as the subordinate machines, the local positioning system is used to localize a truck in the vicinity of the loader or excavator. This may be used to provide instructions to the truck operator for where to park. It may also be used to provide the operator of the excavator or loader information about where the truck is parked, or as an input to an automation system working to automatically load the truck using the excavator or wheel loader. In this example, the peer-to-peer communication capabilities of the tags may provide additional functionality. For instance, if the excavator or wheel loader is equipped with a payload weighing system, the tags can be used to automatically associate each load of material with the truck that received the material. If the truck then passes over a scale, or is equipped with on-board payload weighing, the truck-measured weight can be cross-checked to the system of the wheel loader or excavator.

The accuracy of the proposed positioning solution can be improved by including additional RF ranging sensors into the network. Utilizing a fourth RF ranging sensor on the primary machine allows the position solution of the subordinate machines to be performed using a best-fitting algorithm that is less sensitive to measurement noise than the direct solution. It is likewise possible to extend the use of a best fit solution to the calculation of the global velocity of the subordinate machines.

In the case where a planar simplification is not sufficient, for instance if the RF ranging sensors on the subordinate machines cannot be placed within the sensing plane, the workflow described above can be extended to the 3D system. This requires a set of four RF ranging sensors (anchor sensors) on the primary vehicle in order to determine the 3D position of the subordinate vehicles. These four sensors must be arranged in a non-planar network. That is, for the plane composed of any three of the RF ranging sensors, the fourth sensor must not lie within or near the plane. It is desirable to have as wide an offset from the plane as physically possible on the vehicle in order to provide the best geometry possible for the positioning solution. As in the 2D case, it is possible to include additional RF ranging sensors on the primary vehicle to allow a best-fit solution to be used to calculate the position of the subordinate vehicle.

Although, as shown above, solutions with a single subordinate vehicle or with an architecture that is configured only for communication between a primary vehicle and each of a plurality of subordinate vehicles, optionally, additional RF ranging measurements between the various subordinate vehicles can be included in order to obtain a better solution for the network geometry. In the peer-to-peer case for the subordinate vehicles, it is possible to set up rules so that a first subset of the subordinate vehicles communicates with the primary vehicle and then themselves act as a positioning network for other subsets of subordinate vehicles. Advantageously, this would enable the system to dynamically assign groups of vehicles to different subnets in order to optimize the communication loads on all of the RF ranging sensors to prevent any particular sensor from exceeding its communication bandwidth.

Although the invention is illustrated above, partly with reference to some preferred embodiments, it must be understood that numerous modifications and combinations of different features of the embodiments can be made. All of these modifications lie within the scope of the appended claims.

**Claims**

1. Method (100) for continuously determining a position of one or more moving vehicles of a fleet (1) of vehicles, the fleet of vehicles including a primary vehicle (10) and one or more subordinate vehicles (11, 12, 13), the primary vehicle being equipped with one or more components (51, 52) of a reference positioning system (5), the reference positioning system providing reference position information regarding a position of the one or more components (51, 52) in a reference coordinate system, the method comprising

    - providing (110) an anchor module (2) at the primary vehicle (10), the anchor module comprising at least three radio-frequency sensors (21, 22, 23) that are positioned on the primary vehicle (10) with a known spatial relationship to one another and to the one or more components (51, 52), each of the radio-frequency sensors (21, 22, 23) being configured to emit and receive radio signals;
    - providing (115) a tag module (3, 3', 3") on each of the subordinate vehicles (11, 12, 13), each tag module being configured to emit and receive radio signals; and
    - performing one or more ranging processes for continuously determining the positions of each of the subordinate vehicles (11, 12, 13), the one or more ranging processes comprising at least a first ranging process for determining the position of a first subordinate vehicle (11),

wherein the first ranging process comprises:

    - determining (120), using the reference position information and the known spatial relationship, a position of the radio-frequency sensors (21, 22, 23) in the reference coordinate system;
    - exchanging (130) a set of radio signals (32, 33) between a first tag module (3) on the first subordinate vehicle (11) and each of the radio-frequency sensors (21, 22, 23);
    - calculating (140) a time of flight of each set of radio signals (32, 33);
    - calculating (150) a distance ($d_1$, $d_2$, $d_3$) between the first tag module (3) and each of the respective radio-frequency sensors (21, 22, 23) based on the determined time of flight of the respective set of radio signals (32, 33);
    - deriving (160) a position of the first tag module (3) and/or the first subordinate vehicle (11) in the reference coordinate system based on the calculated distances ($d_1$, $d_2$, $d_3$); and
    - providing (170) a report signal (34) indicating the derived position of the first subordinate vehicle (11).

2. Method (100) according to claim 1, wherein the reference positioning system (5) is a GNSS positioning system (5), the one or more components (51, 52) being one or more GNSS antennas that are configured to receive GNSS signals, the GNSS positioning system (5) providing GNSS position information regarding a position of the one or more GNSS antennas in a GNSS coordinate system.

3. Method (100) according to claim 1 or claim 2, wherein a frequency of the set of signals (32, 33) is in the ultra-wideband range.

4. Method (100) according to any one of the preceding claims, wherein the set of signals comprises a range signal (32) and a response signal (33), wherein

- the range signal (32) is emitted by the radio-frequency sensors (21, 22, 23) of the anchor module (2), and the response signal (33) is emitted, in response to receiving the range signal (32), by the first tag module (3), particularly wherein the radio-frequency sensors (21, 22, 23) emit the range signal (32) simultaneously; or
- the range signal (32) is emitted by the first tag module (3), and the response signal (33) is emitted, in response to receiving the range signal (32), by the radio-frequency sensors (21, 22, 23) of the anchor module (2), particularly wherein the radio-frequency sensors (21, 22, 23) emit the response signal (33) simultaneously.

5. Method (100) according to claim 4, wherein

- the response signal (33) is emitted after a known response time, particularly wherein the response time is shorter than 1 ms; and
- calculating (150) the distance ($d_1$, $d_2$, $d_3$) between the first tag module (3) and each of the radio-frequency sensors (21, 22, 23) is also based on the response time,

particularly wherein the range signal (32) is emitted at a first point of time, and the response signal is received at a second point of time, wherein calculating (140) the time of flight of the sets of radio signals (32, 33) is based on the following equation:

$$ToF = \frac{t_1 - t_0 - \Delta t}{2},$$

where ToF is the time of flight, $t_0$ is the first point of time, $t_1$ is the second point of time and $\Delta t$ is the known response time, particularly wherein each time of flight is calculated at the anchor module (2).

6. Method (100) according to claim 4 or claim 5, wherein an initialization signal (31) is emitted by the first tag module (3), and the range signal (32) is emitted upon receiving the initialization signal (31), particularly wherein the initialization signal (31) comprises information allowing identification of the first tag module (3) and/or the first subordinate vehicle (11).

7. Method (100) according to any one of the preceding claims, wherein the report signal (34) is provided (170) to the first subordinate vehicle (11), wherein the position of the first subordinate vehicle (11)

- is displayed to an operator of the first subordinate vehicle (11); and/or
- provided to a machine control unit of the first subordinate vehicle (11) for at least partially controlling operation of the first subordinate vehicle (11),

particularly wherein providing (170) the report signal (34) comprises emitting the report signal (34) by at least one of the radio-frequency sensors (21, 22, 23) and receiving the report signal (34) by the first tag module (3).

8. Method (100) according to any one of the preceding claims, wherein providing (110) the anchor module (2) comprises

- positioning (112) at least three radio-frequency sensors (21, 22, 23) of the anchor module (2) in a common plane, particularly wherein the common plane is a horizontal plane;
- determining (113) a geometry of the radio-frequency sensors (21, 22, 23) and the one or more components (51, 52); and
- determining (114) an orientation of the radio-frequency sensors (21, 22, 23) relative to a heading direction of the primary vehicle (10),

particularly wherein

- for adjusting (112) the radio-frequency sensors of the anchor module (2) to be at a same height, the primary vehicle (10) is placed (111) on a level surface; and/or
- providing (115) the tag modules (3, 3', 3") comprises positioning each tag module (3, 3', 3") in the common plane.

9. Method (100) according to any one of the preceding claims, wherein the anchor module (2) comprises at least four radio-frequency sensors, wherein the derived position of the first tag module (3) and/or the first subordinate vehicle (11) is a 3D position, the 3D position being derived based on the calculated distances between the first tag module (3) and the at least four radio-frequency sensors, particularly wherein

- the 3D position of the first subordinate vehicle (11) is derived relative to the primary vehicle (10); and/or
- providing (110) the anchor module (2) comprises positioning (112) at least three radio-frequency sensors (21, 22, 23) of the anchor module (2) in a common plane and at least one radio-frequency sensor (21, 22, 23) of the anchor module (2) outside of the common plane.

10. Method (100) according to any one of the preceding claims, wherein the set of signals (32, 33) is exchanged iteratively, particularly at least every 500 ms, in particularly wherein each iteration of exchanging the set of signals (32, 33) effects calculating (150) the distance, deriving (160) the position of the first subordinate vehicle (11) and providing (170) the report signal (34).

11. Method (100) according to claim 10, comprising

    - receiving, at the anchor module (2), velocity information regarding a current velocity of the primary vehicle (10); and
    - calculating, based on the velocity information and on a plurality of calculated distances and/or derived positions, a current or recent velocity of the first subordinate vehicle (11),

    wherein the report signal (34) also indicates the current or recent velocity of the first subordinate vehicle (11), particularly wherein the report signal (34) also indicates the current velocity of the primary vehicle (10).

12. Method (100) according to any one of the preceding claims, wherein the fleet (1) comprises at least two subordinate vehicles (11, 12) and the method comprises at least a second ranging process for continuously determining the position of a second subordinate vehicle (12), particularly wherein the fleet (1) comprises a plurality of subordinate vehicles (11, 12, 13) and the method comprises a plurality of simultaneously performed ranging processes for continuously determining the positions of the plurality of subordinate vehicles (11, 12, 13).

13. Vehicle positioning system configured to continuously determine, particularly according to the method (100) according to any one of claims 1 to 13, a position of one or more moving vehicles of a fleet (1) of vehicles, the fleet of vehicles including a primary vehicle (10) and one or more subordinate vehicles (11, 12, 13), the primary vehicle being equipped with a reference positioning system (5) comprising one or more components (51, 52), the reference positioning system (5) providing reference position information regarding a position in a reference coordinate system,
    **characterized by**

    - an anchor module (2) provided at the primary vehicle (10), the anchor module comprising at least three radio-frequency sensors (21, 22, 23) that are positioned on the primary vehicle (10) with a known spatial relationship to one another and to the one or more components (51, 52), each of the radio-frequency sensors (21, 22, 23) being configured to emit and receive radio signals; and
    - a tag module (3, 3', 3") provided on each of the subordinate vehicles (11, 12, 13), each tag module being configured to emit and receive radio signals,

    wherein the positioning system is configured to perform at least a first ranging process for continuously determining the position of a first subordinate vehicle (11), the first ranging process comprising:

    - determining (120), using the reference position information and the known spatial relationship, a position of the radio-frequency sensors (21, 22, 23) in the reference coordinate system;
    - exchanging (130) a set of radio signals (32, 33) between a first tag module (3) on the first subordinate vehicle (11) and each of the radio-frequency sensors (21, 22, 23);
    - calculating (140) a time of flight of each set of radio signals (32, 33);
    - calculating (150) a distance ($d_1$, $d_2$, $d_3$) between the first tag module (3) and each of the respective radio-frequency sensors (21, 22, 23) based on the determined time of flight of the respective set of radio signals (32, 33);
    - deriving (160) a position of the first tag module (3) and/or the first subordinate vehicle (11) in the reference coordinate system based on the calculated distances ($d_1$, $d_2$, $d_3$); and
    - providing (170) a report signal (34) indicating the derived position of the first subordinate vehicle (11).

14. Vehicle positioning system according to claim 13, wherein the reference positioning system (5) is a GNSS positioning system (5), the one or more components (51, 52) being one or more GNSS antennas that are configured to receive GNSS signals, the GNSS positioning system (5) providing GNSS position information regarding a position of the one or more GNSS antennas in a GNSS coordinate system.

15. Computer program product for performing the one or more ranging processes of the method (100) according to any one of claims 1 to 12.

Fig. 2

Fig. 1

— 100

**110** — 

| Position anchor module on primary vehicle |

**115** — 

| Position tag module on subordinate vehicle |

**120** — 

| Determine GNSS position of anchor module |

**130** — 

| Exchange signals between anchor sensors and tag sensor |

**140** — 

| Determine time-of-flight of signals |

**150** — 

| Calculate distances between anchor sensors and tag sensor |

**160** — 

| Derive position of subordinate vehicle |

**170** — 

| Provide report signal |

Fig. 3

EP 4 729 975 A1

110

111 — Place primary machine on level surface

112 — Adjust sensor height

113 — Determine geometry

114 — Determine orientation relative to heading direction

**Fig. 4**

Tag (3)　　　　d　　　　Anchor (2)

31

32　　　　　　$t_0$

ToF

$\Delta t$

ToF

33　　　　　　$t_1$

34

**Fig. 5**

| | Europäisches Patentamt European Patent Office Office européen des brevets | **EUROPEAN SEARCH REPORT** | **Application Number** EP 24 20 7617 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | US 2022/221550 A1 (HÁGA PÉTER [HU] ET AL) 14 July 2022 (2022-07-14) * paragraphs [0001], [0006], [0021], [0025], [0027], [0028], [0030] * ----- | 1-15 | INV. G01S5/00 G01S5/02 G01S5/14 G01S13/76 |
| Y | US 2019/294166 A1 (HILL EDWARD L [US] ET AL) 26 September 2019 (2019-09-26) * paragraphs [0018], [0019], [0020], [0021], [0069] * ----- | 1-15 | |
| A | US 2023/410662 A1 (SHA CHENGXIAN [CN]) 21 December 2023 (2023-12-21) * abstract * ----- | 1-15 | |

| | TECHNICAL FIELDS SEARCHED (IPC) |
| --- | --- |
| | G01S |

The present search report has been drawn up for all claims

| Place of search | Date of completion of the search | Examiner |
| --- | --- | --- |
| Munich | 1 April 2025 | Chindamo, Gregorio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 7617

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | | Publication date |
|---|---|---|---|---|---|
| US 2022221550 | A1 | 14-07-2022 | EP | 4004577 A1 | 01-06-2022 |
| | | | US | 2022221550 A1 | 14-07-2022 |
| | | | WO | 2021018385 A1 | 04-02-2021 |
| US 2019294166 | A1 | 26-09-2019 | NONE | | |
| US 2023410662 | A1 | 21-12-2023 | CN | 113766416 A | 07-12-2021 |
| | | | EP | 4207822 A1 | 05-07-2023 |
| | | | US | 2023410662 A1 | 21-12-2023 |
| | | | WO | 2022116609 A1 | 09-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2155968 B1

- EP 3477335 B1